# EUROPÄISCHE PATENTANMELDUNG

(11) **EP 2 036 963 A1**
(43) Veröffentlichungstag der Anmeldung: **18.03.2009**
(21) Anmeldenummer: 07018087.2
(22) Anmeldetag: 14.09.2007
(51) Int. Cl.: C09K 8/32, C09K 8/36

(54) **Schmiermitteladditive für Bohrspülmittel**

(71) Anmelder: Cognis Oleochemicals GmbH, 40589 Düsseldorf (DE)
(72) Erfinder: Mäker, Diana, 40789 Monheim (DE); Müller, Heinz, 40789 Monheim (DE)
(74) Vertreter: Herzog, Martin

(57) **Zusammenfassung**

Beschrieben wir die Verwendung von Oligoglycerinfettsäureester, hergestellt aus
(a) einer Säurekomponente, ausgewählt aus
(a1) Fettsäuren der allgemeinen Formel (I)

R-COOH (I)

in der R für einen gesättigten oder ungesättigten, verzweigten oder linearen Alkyloder Alkenylrest mit 7 bis 21 C-Atomen steht, und/oder
(a2) Dicarbonsäuren und/oder
(a3) Dimerfettsäuren und/oder
(a4) Oligomerfettsäuren und/oder
(a5) Hydroxyfettsäuren mit

(b) einer Polyolkomponente, die ausgewählt ist aus Oligoglycerinen oder Alkoxylate von Oligoglycerinen, als Additiv ölbasierten Bohrspülmitteln zur Verbesserung der Schmierwirkung dieser Spülungssysteme.

## Beschreibung

Die vorliegende Anmeldung betrifft den Einsatz bestimmter Ester als Additiv in ölbasischen Bohrspülmitteln, sowie Bohrspülmitteln, die diese Additive enthalten. Die erfindungsgemäßen Additive dienen dabei insbesondere der Verbesserung der Schmierwirkung der Bohrspülungen.

Bohrlochbehandlungsmittel sind alle Arten von Hilfsflüssigkeiten, die bei der Erbohrung von Erdöl- oder Erdgas-Lagerstätten Einsatz finden können. Dabei kommt den so genannten Bohrspülflüssigkeiten und darauf aufgebauten Bohrspülschlämmen oder Bohrspülungen, die sowohl bei landgestützten als auch bei seegestützten Bohrungen Verwendung finden können besondere Bedeutung zu. Bekannt sind einerseits wasserbasierte Bohrspülungen mit einem Gehalt an etwa 1 bis 50% emulgierter Ölphase - neben den anderen üblichen Hilfsstoffen einer solchen Bohrspülung - die auch als O/W-Emulsionsspülungen bezeichnet werden. Auf der anderen Seite sind in breitem Umfang ölbasierte Spülungssysteme im praktischen Einsatz, bei denen das Öl die fließfähige Phase oder doch wenigstens einen substantiellen Anteil der fließfähigen Phase als geschlossene Ölphase bildet. Besondere Bedeutung haben hier die so genannten Invert-Bohrspülschlämme, die auf der Basis W/O-Emulsionen eine disperse wässrige Phase in der geschlossenen Ölphase enthalten. Der Gehalt an disperser wässriger Phase liegt üblicherweise im Bereich von wenigstens etwa 5 bis 10 Gew.-% bis zu etwa 50 bis 60 Gew.-%. Neben diesen W/O-Invert-Bohrspülschlämmen sind aber auch die so genannten true-oil-Muds bekannt, deren Flüssigphase nahezu ausschließlich aus einer geschlossenen Ölphase gebildet ist, die allenfalls geringe Mengen - üblicherweise nicht mehr als etwa 5 bis 10 Gew.-% - an wässriger Phase dispergiert enthalten. Die nicht-wässerige Phase derartiger Spülungssysteme wird durch die so genannte Carrier-Fluid gebildet. Es handelt sich dabei ursprünglich um Dieselöl, welches mit bestimmten Additiven versetzt die eigentliche Bohrspülung bildet. Mit Ende der achtziger Jahre kam aber der Bedarf nach umweltfreundlichen Spülungssystemen und somit Carrier-Fluids auf. Diese sollten insbesondere besser biologisch abbaubar sein, als das bislang eingesetzte Dieselöl.
Neben diversen flüssigen Estern, wie sie z.B. in der EP 0 374 672 A1 beschrieben werden, wurden auch olefinische Kohlenwasserstoffe auf ihre Brauchbarkeit hin untersucht. Verwiesen sei hier exemplarisch auf die EP 0 765 368 A1, welche die Verwendung von so genannten alpha-Olefinen als Carrier-Fluid zum Gegenstand hat.

Zu den ständigen Problemen bei der Formulierung von derartigen ölbasierten Bohrspülmitteln gehört eine zu geringe Schmierwirkung des Mittels, die aber durch Zusatz von Additiven verbessert werden kann. Dieses Problem tritt insbesondere bei Spülungen auf, deren Ölphase kurzkettigen und verzweigten Paraffine enthält, aber auch bei Ölphasen enthaltend lineare alpha-Olefine oder interne Olefine z.B. mit der C-Kettenlänge C14 bis C18. Bei den im offshore-Bereich inzwischen übliche abgelenkten Bohrungen wird ebenfalls eine erhöhte Schmierwirkung auch bei ölbasierten Spülungssystemen gefordert.

Es wurde nun gefunden, dass durch Verwendung bestimmter Polyolester eine Verbesserung der Schmierwirkung von ölbasierten Bohrspülungen bewirkt werden kann.

Gegenstand der Erfindung ist die Verwendung von Oligoglycerinfettsäureestern, hergestellt aus (a) einer Säurekomponente, ausgewählt aus
(a1) Fettsäuren der allgemeinen Formel (I) R-COOH (I) in der R für einen gesättigten oder ungesättigten, verzweigten oder linearen Alkyl- oder Alkenylrest mit 7 bis 21 C-Atomen steht, und/oder (a2) Dicarbonsäuren, (a3) Dimerfettsäuren und/oder (a4) Oligomerfettsäuren und/oder (a5) Hydroxyfettsäuren mit
(b) einer Polyolkomponente, die ausgewählt ist aus Oligoglycerinen oder Alkoxylate von Oligoglycerinen, als Schmiermitteladditiv in ölbasierten Bohrspülmitteln.

Die erfindungsgemäßen Oligoglycerinester sind an sich bekannte Verbindungen, die z.B. durch sauer oder basisch katalysierte Veresterung direkt aus Oligoglycerin mit den Fettsäuren erhalten werden können. Die EP 064 697 A1 beschreibt verschiedene Oligoglycerinester als Gleitmittel für PVC. In dieser Schrift wird auch die Herstellung der Oligolycerinester mittels basischer Katalyse aus Fettsäuren und Poly- bzw. Oligoglycerinen beschrieben. Die Oligoglycerinester (oder kurz "Oligoglyceride") im Sinne der Erfindung sind in der Regel bei Raumtemperatur flüssige Verbindungen, die aus einer Mischung unterschiedlicher Oligoglycerinester bestehen, wobei noch Ausgangstoffen, insbesondere Glycerin enthalten sein können. Typischerweise enthalten technische Oligoglycerine, die zur Herstellung von den erfindungsgemäßen Oligoglycerinestern verwendet werden können Mischungen aus Di-und Triglygerin sowie Tetra- und Pentaglycerine sowie Glycerin. Je nach Qualität der Oligoglycerine können diese zwischen 20 und 45 Gew.-% an Glycerin, zwischen 20 und 40 Gew.-% Diglycerin, zwischen 10 und 20 Gew.-% Triglycerin und zwischen 1 bis 10 Gew.-% an Tetraglycerin sowie zwischen 0,5 bis 5 Gew.-% an Pentaglycerin enthalten.
Aus der DE 102 52 973 A1 ist bereits bekannt, Oligoglycerinfettsäureester zusammen mit einem ausgewählten Alkylphenolharz zur Verbesserung der Schmierfähigkeit von Brennstoffölen einzusetzen.
Die US 2003/0114316 A1 offenbart Invert-Bohrspülungssysteme, also Mittel die eine Wasser- und Ölphase in Form nebeneinander in emulgierter Form, und zwar ausschließlich als Wasser-in-Öl-Emulsion enthalten, wobei die Ölphase kontinuierlich ist und die Wasserphase die diskontinuierliche Phase darstellt, wobei diese Invert-Systeme entweder Fettsäureester des Di- bzw. Triglycerins oder Ester von Polyglycerinen, jeweils mit Fettsäuren des Schnitts C10-C20 als Emulgatoren enthalten müssen. Die Ester dieser Schrift sind zwingend Diester dieser C10-C20 Fettsäuren mit Di- oder Triglycerin bzw. Polyglycerinen,
wobei namentlich nur das Polyglycerin-2-diisostearat und Polyglycerin-3-diisostearat offenbart werden. Diese Ester dienen nach der Lehre der US 2003/0114316 als Emulgatoren, um die gewünschte Invert-Emulsion herzustellen. Eine Eignung als Schmiermittel ist dieser Schrift nicht zu entnehmen.

Als Säurenkomponente (a) der erfindungsgemäßen Ester kommen insbesondere die Fettsäuren des Typs (a1) in Frage, die der Formel (I) folgen. Hier seien als bevorzugt genannt die Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren Mischungen, die z.B. technisch bedingt, bei der Druckspaltung von natürlichen Fetten und Ölen, bei der Reduktion von Aldehyden aus der Roelen'schen Oxosynthese anfallen.
Bevorzugt sind technische Fettsäuren mit 12 bis 18 Kohlenstoffatomen, wie beispielsweise Kokos-, Palm-, Palmkern- oder Talgfettsäure.
Besonders bevorzugt sind Oligoglycerinester, worin die Fettsäurekomponente (a1) ausgewählt ist aus einfach oder mehrfach ungesättigten, vorzugsweise linearen Fettsäuren und vorzugsweise den linearen ungesättigten Monocarbonsäuren, wobei die Ölsäure, auch in technischen Qualitäten, besonders bevorzugt ist.
Ebenfalls bevorzugt sind Oligoglycerinester deren Komponente (a1) aus Tallölfettsäuren ausgewählt ist. Tallölfettsäuren enthalten insbesondere Mischungen aus Linolsäure und konjugierte C18-Fettsäuren (45-65 Gew.-%), Ölsäure (25-45 Gew.-%), Octadeca-5,9,12-triensäure (5-12 Gew.-%) und gesättigte Fettsäuren (1-3 Gew.-%). Neben den Monocarbonsäuren des Typs (a1) sind auch Dicarbonsäuren (a2), Dimerfettsäuren bzw. oligomere Fettsäuren des Typs (a3) bzw. (a4) geeignet.

Ebenfalls geeignete Säurekomponenten stellen die Dicarbonsäuren (a2) dar. Dabei handelt es sich um solche Carbonsäuren, die zwei -COOH-Funktionen im Molekül enthalten, wobei insbesondere die gesättigten Dicarbonsäuren bevorzugt sind. Die Dicarbonsäuren (a2) enthalten vorzugsweise zwischen 4 und 22 C-Atomen, insbesondere zwischen 6 und 18 C-Atomen. Beispielhaft seien genannt die Oxal-, Malon-, Bernstein-, Glutar-, Adipin-, Pimelin-, Suberin-, Azealain- bzw. die Sebacinsäure. Auch ungesättigte Dicarbonsäuren sind möglich, z.B. die Fumar- oder die Maleinsäuren. Die Dicarbonäuren der Gruppe (a2) umfassen nicht die Dimerfettsäuren gemäß der Gruppe (a3).

Dimerfettsäuren (a3) dagegen sind bei Raumtemperatur (21° C) flüssige, oxidationsstabilisierte Dicarbonsäuren, die z.B. durch katalytische Dimerisierung ungesättigter Fettsäuren, z.B. der Ölsäure, Ricinenfettsäure oder der Tallölfettsäure unter Sauerstoff-Ausschluß gewonnen werden. Die Verknüpfung ergibt je nach verwendeter Fettsäure lineare, monocyclische oder aromatische Strukturen. Die Reaktion verläuft unter Isomerisierung isolierter Doppelbindungen überwiegend nach einer Addition vom Diels-Alder-Typ ab. Kommerziell erhältliche dimerisierte Fettsäuren werden destillativ aufgearbeitet und bestehen aus einem Gemisch, das z.B. neben geringen Anteilen linearer und verzweigter C₁₈-Monocarbonsäuren (Monomerfettsäure) überwiegend C₃₆-Dicarbonsäuren und je nach Aufwand der Aufarbeitung unterschiedlich hohe Anteile C₅₄-Tricarbonsäure (Trimerfettsäure) neben Spuren höherer Polymerfettsäuren enthält. Sowohl hochreine dimere Fettsäuren mit > 97 Gew.-% Dicarbonsäure-Gehalt als auch hydrierte, völlig vergilbungsfreie Typen werden industriell hergestellt.

Oligomere Fettsäuren (a4) stellen Umsetzungsprodukte ungesättigter Fettsäuren untereinander dar, wobei mehr als 2 und maximal 5 Fettsäuremoleküle miteinander reagieren müssen. Diese Säurekomponente stellt ebenfalls eine Mischung unterschiedlicher Oligomere untereinander dar.

Auch Mischungen von Oligoglycerinester, die in Gegenart unterschiedlicher Fettsäurequellen hergestellt worden sind, oder durch Mischung erhalten wurden, sind als Polyokomponente für die Veresterung bevorzugt. Bevorzugt sind unter anderem auch solche Oligoglycerinester, die durch Umsetzung von Oligoglycerinen der Formel (II) mit Fettsäuremischungen, vorzugsweise Mischungen aus gesättigten und ungesättigten Fettsäuren (Typ (a1)) und/oder Dicarbonsäuren (a2), Dimeren- und/oder oligomeren Fettsäuren (Typ (a3) und (a4) hergestellt worden sind.

Weiterhin können Hydroxyfettsäuren als Komponente (a5) Verwendung finden, wobei z.B. die Ricinolsäure und besonders bevorzugt die Hydroxystearinsäure Vertreter dieses Klasse von Fettsäuren sind.

Die Komponente (b), also die Oligoglycerine im Sinne der vorliegenden Lehre enthalten zwischen 2 und 10 Glycerinmonomeren im Molekül, wobei in Abhängigkeit des Herstellprozesses (z.B. der Reaktionstemperatur oder -zeit bzw. den verwendeten Katalysatoren) Mischungen verschiedener Oligomeren nebeneinander vorliegen. Moleküle mit mehr als 10 Monomeren Glycerin werden als Polyglycerine bezeichnet.

Die Polyolkomponente (b) der erfindungsgemäßen Ester, also die Oligoglycerine können vorzugsweise mit der folgenden allgemeinen Formel (II) beschrieben werden: 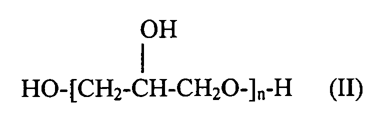 wobei n eine Zahl zwischen 2 und 10 bedeutet. Vorzugsweise können solche Oligoglycerine als Polyolkomponente (b) zum Einsatz kommen, die überwiegend zwischen 2 und 8 und vorzugsweise zwischen 4 und 8 Glycerinmonomeren enthalten. Die Ester folgen dann vorzugsweise der allgemeinen Formel (III): 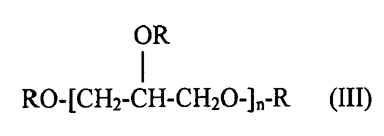 in der n für Zahlen zwischen 2 und 10 Steht und R entweder ein Wasserstoffatom oder einen Rest CO-R' darstellt, worin R' dann einen gesättigten oder ungesättigten Alkyl- oder Alkenylrest mit 7 bis 21 C-Atomen repräsentiert, wobei mindesten eine OH-Funktion des Oligoglycerins verestert sein muss. Je nach Qualität der Oligoglycerine können diese zwischen 20 und 45 Gew.-% an Glycerin, zwischen 20 und 40 Gew.-% Diglycerin, zwischen 10 und 20 Gew.-% Triglycerin und zwischen 1 bis 10 Gew.-% an Tetraglycerin sowie zwischen 0,5 bis 5 Gew.-% an Pentaglycerin enthalten.

Die oben gezeigte Formel (III) gibt Oligoglycerinester mit der Säurekomponente (a1) wieder. Sofern Hydroxyfettsäuren (a4) zur Veresterung eingesetzt werden, können die Reste R natürlich auch Alkyl- oder Alkenylreste enthalten die eine oder mehrere freie Hydroxylfunktionen aufweisen.

Neben den Oligoglycerinen können auch deren Alkoxylate, also Umsetzungsprodukte von Oligoglycerinen mit Ethylenoxid und/oder Oligomeren von alkoxyliertem Glycerin mit Ethylenoxid und/oder Propylenoxid als Alkoholkomponente für die erfindungsgemäßen Ester eingesetzt werden. Bevorzugt sind hier die ethoxylierten Oligoglycerine.
Es ist bevorzugt, wenn bei der Veresterung das molare Verhältnis von Fettsäuren: Oligoglycerin im Bereich von 5 : 1 bis 1 : 1, vorzugsweise 4 : 1 bis 1 : 1 und insbesondere im Bereich von 4 : 1 bis 1,5 : 1 liegt. Sofern aber als Fettsäurekomponente Dimerfettsäuren (a2) oder die oligomeren Fettsäuren (a3) zum Einsatz kommen ist der Bereich von Fettsäure zu Oligoglycerin von 1 : 1 bis 1 : 2 besonders bevorzugt.

In Abhängigkeit von den Reaktionsbedingungen der Veresterung können Vollester oder Mischungen der unterschiedlichen Partialester, ggf. in Abmischung mit Vollestern nebeneinander vorliegen. Die Oligogylcerinester im Sinne der vorliegenden technischen Lehre stellen überwiegend Partialester dar, wobei Oligoglycerintriester und/oder Tetra-und/oder Pentaester bevorzugt sind.

Die Oligoglycerinester der Erfindung werden in ölbasierten Bohrspülungen als Additiv eingesetzt. Hierbei ist die Wirkung der erfindungsgemäßen Oligolglycerinester als Schmiermittel bevorzugt. Eine Verwendung als Schmiermittel ist dabei so definiert, dass die Reibung der Spülung, z.B. mit dem Bohrgestänge und/oder der Formation - durch Zusatz des Mittels messbare verringert wird.

Ein weiterer Gegenstand der Erfindung betrifft daher die Verwendung der erfindungsgemäßen Oligoglycerinfettsäureester als Schmiermittel für ölbasierte Bohrspülmittel. Als ölbasierte Bohrspülungen (OBM = oil based mud) werden dabei im Folgenden solche Systeme verstanden, die mindestens zu mehr als 50 Gew.-% einer Ölphase - bezogen auf die bei Raumtemperatur ( 21 °C) flüssige Phase des Mittel - enthalten, vorzugsweise zu mehr als 70 Gew.-% und insbesondere zu mehr als 80 Gew.-% und dabei besonders bevorzugt mehr als 90 Gew.-% ein mit Wasser nicht lösliches Öl als flüssige Phase enthalten.

Die vorliegende Lehre umfasst vorzugsweise die Verwendung der Oligoglyceride als Schmiermitteladditiv in Spülungen, die Emulsionen, entweder Wasser-in-Öl (W/O) oder Ölin-Wasser (O/W) ausbilden, wobei die W/O-Systeme, die auch als Invert-Spülungen bezeichnet werden besonders bevorzugt sind.

Ölbasierte Spülungssysteme sind generell solche, bei denen das Öl die fließfähige Phase oder doch wenigstens einen substantiellen Anteil der fließfähigen Phase als geschlossene Ölphase bildet. Besondere Bedeutung haben hier die so genannten Invert-Bohrspülschlämme, die auf der Basis W/O-Emulsionen eine disperse wässrige Phase in der geschlossenen Ölphase enthalten. Der Gehalt an disperser wässriger Phase liegt üblicherweise im Bereich von wenigstens etwa 5 bis 10 Gew.-% bis zu etwa 50 bis 60 Gew.-%. Neben diesen W/O-Invert-Bohrspülschlämmen sind aber auch die so genannten true-oil-Muds bekannt, deren Flüssigphase nahezu ausschließlich aus einer geschlossenen Ölphase gebildet ist, die allenfalls geringe Mengen - üblicherweise nicht mehr als etwa 5 bis 10 Gew.-% - an wässriger Phase dispergiert enthalten.

Die Oligoglycerinester gemäß der obigen Beschreibung können entweder alleine oder in Abmischung mit weiteren, vorzugsweise öllöslichen Komponenten in Bohrspülmitteln als Schmiermitteladditiv verwendet werden. Geeignet und bevorzugt sind dabei Kohlenwasserstoffe, Fettsäureester, Fettsäuren, Fettalkoholen, Tenside, Glycerin, Triglyceride oder Glykole oder beliebige Mischungen dieser Verbindungen.

Tenside sind ebenfalls geeignete Zumischkomponenten für die Oligoglycerinester. Dabei können im Prinzip alle Arten von Tensiden, seien es Anionische, nichtionischem zwitterionische oder kationische Tenside Verwendung finden. Bevorzugt sind aber die nichtionischen und die anionischen Tenside. Typische Beispiele für anionische Tenside sind Seifen, Alkylbenzolsulfonate, Alkansulfonate, Olefinsulfonate, Alkylethersulfonate, Glycerinethersulfonate, Methylestersulfonate, Sulfofettsäuren, Alkylsulfate, Fettalkoholethersulfate, Glycerinethersulfate, Fettsäureethersulfate, Hydroxymischethersulfate, Monoglycerid(ether)sulfate, Fettsäureamid(ether)-sulfate, Mono- und Dialkyl-sulfosuccinate, Mono- und Dialkylsulfosuccinamate, Sulfotriglyceride, Amidseifen, Ethercarbonsäuren und deren Salze. Letztere sind im Sinne der vorliegenden technischen Lehre besonders bevorzugte Tensidkomponenten. Typische Beispiele für nichtionische Tenside sind Fettalkoholpolyglycolether, Alkylphenolpolyglycolether, Fettsäurepolyglycolester, Fettsäureamidpolyglycolether, Fettaminpolyglycolether, alkoxylierte Triglyceride, Mischether bzw. Mischformale, gegebenenfalls partiell oxidierte Alk(en)yloligoglykoside bzw. Glucoronsäurederivate, Fettsäure-N-alkylglucamide, Polyolfettsäureester, Zuckerester, Sorbitanester, Polysorbate und Aminoxide. Sofern die nichtionischen Tenside Polyglycoletherketten enthalten, können diese eine konventionelle, vorzugsweise jedoch eine eingeengte Homologenverteilung aufweisen. Die Tenside sind eine optionaler Bestandteil in den Additiven. Sie werden vorzugsweise in Mengen von 1 bis 15 Gew.-%, insbesondere von 2 bis 15 und bevorzugt von 3 bis 9 Gew.-% eingesetzt, jeweils bezogen auf die Produktabmischung.

Werden die Oligoglycerinester mit anderen Komponenten zusammen als Additiv verwendet so werden die Oligoglycerinester und die anderen Komponenten vorzugsweise in Gewichtsverhältnissen von 10 : 1 bis 1 : 1, vorzugsweise von 8 : 1 bis 6 : 1 und insbesondere von 5 : 1 bis 1 : 1 zusammen verwendet.

Die Additive (ggf. also nur der Oligolgycerinester bzw. Mischungen unterschiedlicher Oligoglycerinester) werden im Sinne der Erfindung vorzugsweise in Mengen von 10 bis 0,1 Gew.-%, bezogen auf das Gesamtgewicht der Spülung eingesetzt. Vorteilhafte Bereiche sind 5 bis 1 Gew.-%, und insbesondere 3 bis 1,5 Gew.-%. Die vorliegende technische Lehre schließt daher auch ein Verfahren zur Verbesserung der Schmierwirkung von ölbasischen Bohrspülungen ein, wobei den Spülungen Oligoglyceride in Mengen von 0,1 bis 10 Gew.-% zugesetzt werden.

Ein weiterer Gegenstand der vorliegenden Erfindung betrifft Bohrlochbehandlungsmittel, enthaltend eine nicht-wässerigen Ölphase, Beschwerungsmittel, fluid-loss Additive, Salze und ggf. eine wässerige Phase, Emulgatoren, viskositätsregulierende Additive, Netzmittel, Biozide, Korrosionsinhibitoren, und/oder eine Alkalireserve, wobei die nichtwässerige Phase ganz oder teilweise ausgewählt ist aus der Gruppe der
a) Paraffine mit 5 bis 22 C-Atomen und /oder
b) internen Olefine mit 12 bis 30 C-Atomen im Molekül und/oder
c) Carbonsäureestern der allgemeinen Formel R-COO-R, in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet
d) Mineralöle
e) lineare alpha-Olefine (LAOs) mit 12 bis 30 C-Atomen
f) Carbonate
wobei das Bohrlochbehandlungsmittel Additive, die Oligoglycerinester gemäß der obigen Beschreibung enthalten oder aus diesen bestehen in Mengen von 0,1 bis 10 Gew.-%, vorzugsweise in Mengen von 1 bis 5 Gew.-% und insbesondere in Mengen von 1 bis 4 Gew.-% bezogen auf das Gewicht der gesamten Spülung enthält.

Bevorzugt seien können dabei solche Bohrspülungen, deren Dichte der flüssigen Komponente 1,2 bis 3,0 g/cm³ und insbesondere 1,5 bis 3,0 g/cm³ beträgt. Die Ölphasen der erfindungsgemäßen Systeme enthalten die Komponenten a) bis e) alleine oder die Komponenten a), b), d) oder e) gemeinsam in Abmischung mit Estern c sowie ggf. in Abmischung mit anderen geeigneten Ölphasen. Es sind auch beliebige Mischungen der Ölphasen a) bis e) untereinander möglich.

### Komponente a)

Als Komponente a) werden erfindungsgemäß lineare oder verzweigte Paraffine mit 5 bis 22 C-Atomen eingesetzt. Paraffine - korrekter bezeichnet als Alkane - sind bekanntermaßen gesättigte Kohlenwasserstoffe, die für die linearen bzw. verzweigten Vertreter der allgemeine Summenformel CₙH₂ₙ₊₁ folgen. Die cyclischen Alkane folgen der allgemeinen Summenformel CₙH₂ₙ. Besonders bevorzugt sind die linearen und verzweigten Paraffine, wohingegen cyclische Paraffine weniger bevorzugt sind. Insbesondere bevorzugt ist die Verwendung von verzweigten Paraffinen. Weiterhin sind solche Paraffine bevorzugt, die bei Raumtemperatur flüssig sind, also solche mit 5 bis 16 C-Atomen pro Molekül. Es kann aber auch bevorzugt sein Paraffine mit 17 bis 22 C-Atome, die eine wachsartige Konsistenz aufweise einzusetzen. Bevorzugt ist es aber, Mischungen der verschiedenen Paraffine einzusetzen, wobei es besonders bevorzugt ist, wenn diese Mischungen bei 21 °C noch flüssig sind. Solche Mischungen können z.B. aus Paraffinen mit 10 bis 21 C-Atomen gebildet werden. Paraffine sind besonders bevorzugte Ölphasen - alleine oder als Mischungsbestandteil mit weiteren Ölphasen - in Bohrspülungen - vorzugsweise solchen des Invert-Typs, in denen die erfindungsgemäßen Oligogylcerinester als Verdicker Verwendung finden.

### Komponente b)

Als Komponente b) sind interne Olefine (im Weiteren als IO abgekürzt) erfindungsgemäß einsetzbar. Dabei sind IO's ebenfalls an sich bekannte Verbindungen, die durch alle dem Fachmann dazu bekannten Verfahren hergestellt werden können. Die EP 0 787 706 A1 beschreibt z.B. ein Verfahren zur Synthese von IOs durch Isomerisierung von Alpha-Olefinen an Sulfon- oder Persulfonsäuren. Charakteristisch ist, dass die so gewonnen IO linear sind und mindestens eine olefinische Doppelbindung enthalten, die sich nicht in der Alpha-Position der Alkylkette befindet. Vorzugsweise werden erfindungsgemäß solche IO beziehungsweise IO-Gemische verwendet, welche IO mit 12 bis 30 C-Atomen im Molekül, vorzugsweise mit 14 bis 24 C-Atomen und insbesondere mit bis zu 20 C-Atomen im Molekül enthalten.

### Komponente c)

Weiterhin sind Ester der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 6 bis 22 C-Atomen bedeutet, Bestandteil der erfindungsgemäßen Ölphasen. Auch derartige Ester sind bekannte chemische Verbindungen. Deren prinzipielle Verwendung in Bohrspülungen ist z.B. Gegenstand der EP 0 374 672 A1 bzw. der EP 0 374 671 A1. Besonders bevorzugt ist die Verwendung solcher Ester deren Rest R für einen gesättigten oder ungesättigten Alkylrest mit 15 bis 25 und R' für einen gesättigten Alkylrest mit 3 bis 10 C-Atomen steht. Die gesättigten Verbindungen sind dabei im Besonderen bevorzugt. Es ist im Rahmen der erfinderischen Lehre bevorzugt dass in der Ölphase neben den Estern gemäß obiger Beschreibung maximal 15 Gew.-% (bezogen die Ölphase) an anderen Estern mit Resten R, die für Alkylreste mit mehr als 23 C-Atomen stehen, enthalten sind.

### Komponente d)

Mineralöle sind eine Sammelbezeichnung für die aus mineralischen Rohstoffen (Erdöl, Braun- und Steinkohlen, Holz oder Torf) gewonnenen flüssigen Destillationsprodukte, die im Wesentlichen aus Gemischen von gesättigten Kohlenwasserstoffen bestehen. Vorzugsweise enthalten die Mineralöle nur geringe Mengen an aromatischen Kohlenwasserstoffen, vorzugsweise weniger als 3 Gew.-%. Bevorzugt sind bei 21 °C flüssige Mineralöle auf Basis von Erdöl. Die Mineralöle weisen vorzugsweise Siedepunkte von 180 bis 300 °C auf.

### Komponente e)

Lineare alpha-Olefine (kurz LAO) sind unverzweigte in 1-Postion ("alpha-C-Atom") ungesättigte Kohlenwasserstoffe. Sie können naturstoffbasiert sein, werden aber insbesondere in großem Umfange auch synthetisch gewonnen. Naturstoffbasierte LAO werden durch Dehydratisierung naturstoffbasierter Fettalkohole als lineare Produkte mit geradkettiger Kohlenstoffzahl gewonnen. Auch die auf synthetischem Wege gewonnenen LAO - hergestellt durch Oligomerisation von Ethylen - enthalten häufig geradkettige Kohlenstoffzahlen in der Kette, es sind heute aber auch Verfahren zur Herstellung von ungradzahligen alpha-Olefinen bekannt. Im Sinne der erfindungsgemäßen Definition weisen - aufgrund ihrer Flüchtigkeit - in der Regel wenigstens 10, vorzugsweise wenigstens 12 bis 14 C-Atome im Molekül auf. Die Obergrenze der bei Raumtemperatur fließfähigen LAO liegt im Bereich von C 18-20. Diese Obergrenze ist aber für die Verwertbarkeit dieser Stoffklasse im Rahmen der Erfindung nicht einschränkend. Die Obergrenze geeigneter LAO-Verbindungen für den Einsatz im Rahmen der erfindungsgemäßen Lehre liegt also deutlich über dem zuvor genannten Grenzwert von C 18-20 und kann beispielsweise C30 erreichen.

### Komponente f)

Unter Carbonaten werden im Rahmen der vorliegenden Anmeldung Kohlensäureester von Fettalkoholen mit 8 bis 22 C-Atomen verstanden, vorzugsweise die Diester der Kohlensäure. Solche Verbindungen und deren Einsatz als Ölphase für Bohrspülmittel sind beschrieben in der DE 4018228 A1.

Neben den Komponente a) bis f) können noch andere, wasserunlösliche Bestandteile in den Ölphasen enthalten sein, sofern diese ökologisch verträglich sind. Weitere besonders geeignete Mischungsbestandteile der erfindungsgemäßen Ölphasen sind daher im Einzelnen:
(i) Ester aus C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
(ii) Mischungen sekundärer Ester, ausgewählt aus der Gruppe der Propylcarboxylat, Butylcarboxylat, Pentylcarboxylat, Hexylcarboxylat, Heptylcarboxylat, Octylcarboxylat, Nonylcarboxylate, Decylcarboxylat, Undecylcarboxylat, Dodecylcarboxylat, Tridecylcarboxylat, Tetradecylcarboxylat, Pentadecylcarboxylat, Hexadecylcarboxylat, Heptadecylcarboxylat, Octadecylcarboxylat, Nonadecylcarboxylat, Eicosylcarboxylat, Uneicocarboxylat, Doeicosylcarboxylat und Isomeren davon, wobei die sekundären Ester jeweils eine Carboxylat-Rest mit 1 bis 5 C-Atomen aufweisen, wasserunlösliche Ether einwertiger Alkohole mit 6 bis 24 C-Atomen,
(iii) wasserunlösliche Alkohole mit 8 bis 36 C-Atomen
(iv) poly-Alphaolefine (PAO)
(v) Mischungen der Komponente (i) bis (iv)

Als weiteren Bestandteil enthalten die erfindungsgemäßen Bohrspülungen, sofern es sich um solche des Emulsionstyps handelt, Emulgatoren.
Bei deren Auswahl kommt es entscheidend auf den Spülungstyp an. Für die Praxis brauchbare Emulgatoren zur Ausbildung von W/O-Emulsionen sind insbesondere ausgewählte oleophile Fettsäuresalze, beispielsweise solche auf Basis von Amidoaminverbindungen. Beispiele hierfür werden in der US 4,374,737 und der dort zitierten Literatur beschrieben. Die Emulgatoren zur Ausbildung der Bohrspülung können identisch oder unterschiedlich zu denen sein, die in den erfindungsgemäßen Additiven selbst eingesetzt werden.

Als Emulgatoren kommen vorzugsweise nichtionische Emulgatoren in Frage, die insbesondere einer der nachfolgenden Stoffklassen zuordnen sind: (Oligo)-Alkoxylate - insbesondere niedrig-Alkoxylate, wobei hier entsprechenden Ethoxylaten und/oder Propoxylaten besondere Bedeutung zukommt - von lipophile Reste enthaltenden und zur Alkoxylierung befähigten Grundmolekülen natürlichen und/oder synthetischen Ursprungs. Alkoxylate der angegebenen Art sind bekanntlich als solche - d.h. mit endständiger freier Hydroxylgruppe am Alkoxylatrest - nicht-ionische Emulgatoren, die entsprechenden Verbindungen können aber auch Endgruppenverschlossen sein, beispielsweise durch Veresterung und/oder Veretherung. Eine weitere wichtige Klasse nichtionischer Emulgatoren für die Zwecke der Erfindung sind Partialester und/oder Partialether mehrfunktioneller Alkohole mit insbesondere 2 bis 6 C-Atomen und 2 bis 6 OH-Gruppen und/oder deren Oligomere mit lipophile Reste enthaltenden Säuren und/oder Alkoholen. Ge-eignet sind dabei insbesondere auch Verbindungen dieser Art, die zusätzlich in ihre Molekülstruktur (Oligo-)Alkoxyreste und dabei insbesondere entsprechende Oligoethoxyreste eingebunden enthalten. Die polyfunktionellen Alkohole mit 2 bis 6 OH-Gruppen im Grundmolekül beziehungsweise die sich davon ableitenden Oligomeren können insbesondere Diole und/oder Triole beziehungsweise deren Oligomerisierungsprodukte sein, wobei dem Glykol und dem Glycerin oder ihren Oligomeren besondere Bedeutung zukommen kann. Dem Bereich von Partialethern mehrfunktioneller Alkohole sind auch bekannte nichtionische Emulgatoren von der Art der Ethylen-oxid/Propylenoxid/Butylenoxid-Blockpolymeren zuzuordnen. Ein weiteres Beispiel für entsprechende Emulgatorkomponenten sind Alkyl(poly)glykoside langkettiger Alkohole sowie die bereits benannten Fettalkohole natürlichen und/oder synthetischen Ursprungs beziehungsweise Alkylolamide, Aminoxide und Lecithine. Die Mitverwendung heute handelsüblicher Alkyl(poly)glykosid-Verbindungen (APG-Verbindungen) als Emulgatorkomponenten im erfindungsgemäßen Sinn kann u.a. deswegen besonders interessant sein, weil es sich hier um eine Emulgatorklasse besonders ausgeprägter Ökoverträglichkeit handelt. Ohne Anspruch auf Vollständigkeit seien aus den hier aufgezählten Stoffklassen geeigneter Emulgatorkomponenten zusätz-ich die folgenden Vertreter benannt: (Oligo)alkoxylate von Fettalkoholen, Fettsäuren, Fettamine, Fettamide, Fettsäure- und/oder Fettalkoholester und/oder -ether, Alkanolamide, Alkylphenole und/oder deren Umsetzungsprodukte mit Formaldehyd sowie weitere Umsetzungsprodukte von lipophile Reste enthaltenden Trägermolekülen mit niederen Alkoxiden. Wie angegeben können die jeweiligen Umsetzungsprodukte auch wenigstens anteilsweise Endgruppenverschlossen sein. Beispiele für Partialester und/oder Partialether mehrfunktioneller Alkohole sind insbesondere die entsprechenden Partialester mit Fettsäuren, beispielsweise von der Art der Glycerinmono- und/oder -diester, Glykolmonoester, entsprechende Partialester oligomerisierter mehrfunktioneller Alkohole, Sorbitanpartialester und dergleichen sowie entsprechende Verbin-dungen mit Ethergruppierungen.
Es kann im Sinn der vorliegenden Lehre vorteilhaft sein auf die Verwendung von Difettsäurestern von Polyglycerinen, insbesondere von Polyglycerin-2 bzw -3 distearat oder Difettsäureestern des Di- und/oder Triglycerins mit C10-C20 Fettsäuren in Invertbohrspülungen nach der obigen Beschreibung zu verzichten.

Die Ölphasen der erfindungsgemäßen Mittel weisen vorzugsweise Pourpoints unterhalb 0°C, vorzugsweise unterhalb -5 °C (gemessen nach DIN ISO 3016: 1982-10) auf. Die Brookfield-Viskosität der Ölphasen beträgt bei 0 °C höchstens 50 mPas. Die erfindungsgemäßen Bohrlochbehandlungsmittel weisen, sofern sie als ölbasierte Bohrspülung vom W/O-Typ ausgebildet sind, eine plastische Viskosität (PV) im Bereich von 10 bis 70 mPas und eine Fließgrenze (Yield-Point YP) von 5 bis 60 lb/100 ft^{2,} jeweils bestimmt bei 50 °C, auf. Die kinematische Viskosität der Ölphase gemessen nach Ubbelohde bei 20 °C sollte vorzugsweise höchstens 12 mm²/sec betragen. Die wässerige Phase der erfindungsgemäßen Mittel weist vorzugsweise einen pH-Wert im Bereich von 7,5 bis 12, vorzugsweise von 7,5 bis 11 und insbesondere von 8 bis 10 auf.

Neben den oben aufgeführten Bestandteilen, enthalten die erfindungsgemäßen Mittel noch Additive, beispielsweise Beschwerungsmittel, fluid-loss Additive, weitere viskositätsregulierende Additive, Netzmittel, Salze, Biozide, Korrosionsinhibitoren, und/oder eine Alkalireserve und vor allem Emulgatoren. Es gelten hier die allgemeinen Gesetzmäßigkeiten für die Zusammensetzung der jeweiligen Behandlungsflüssigkeiten, für die im nachfolgenden anhand entsprechender Bohrspülschlämme beispielhafte Angaben gemacht werden. Die Additive können wasserlöslich, öllöslich und/oder wasser- bzw. öl-dispergierbar sein.

Klassische Additive können sein: fluid-loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B wasserquellbare Tone und/oder Salzschichten - und der z. B. wasserbasierten Spülflüssigkeit, Netzmittel zum besseren Aufziehen der emulgierten Ölphase auf Feststoffoberflachen, z. B. zur Verbesserung der Schmierwirkung, aber auch zur Verbesserung des oleophilen Verschlusses freigelegter Gesteinsformationen, bzw. Gesteinsflächen, Biozide, beispielsweise zur Hemmung des bakteriellen Befalls von O/W-Emulsionen und dergleichen. Nur auszugsweise sei dementsprechend zitiert: Feindisperse Zusatzstoffe zur Erhöhung der Spülungsdichte: Weit verbreitet ist das Bariumsulfat (Baryt), aber auch Calciumcarbonat (Calcit) oder das Mischcarbonat von Calcium und Magnesium (Dolomit) finden Verwendung.

Mittel zum Aufbau der Strukturviskosität, die gleichzeitig auch als fluid-loss-Additive wirken: In erster Linie ist hier Bentonit bzw. hydrophobierter Bentonit zu nennen. Für Salzwasserspülungen kommt anderen vergleichbaren Tonen, insbesondere Attapulgit und Sepiolith in der Praxis beträchtliche Bedeutung zu.

Auch der Mitverwendung organischer Polymerverbindungen natürlichen und/oder synthetischen Ursprungs kann beträchtliche Bedeutung in diesem Zusammenhang zukommen. Zu nennen sind hier insbesondere Stärke oder chemisch modifizierte Stärken, Cellulosederivate wie Carboxymethylcellulose, Guargum, Synthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation. Verdünner zur Viskositätsregulierung: Die so genannten Verdünner können organischer oder anorganischer Natur sein, Beispiele für organische Verdünner sind Tannine und/oder Qebracho- Extrakt. Weitere Beispiele hierfür sind Lignit und Lignitderivate, insbesondere Lignosulfonate.

### Beispiele

### Herstellung der Oligoglycerinester

924 g (77 Gew.-%) eine technischen Ölsäure (Säurezahl 201,2) wurden mit 276 g (23 Gew.-%) Oligoglycerin (OH-Zahl: 1178) (Gewichtsverhältnis 3,3 : 1) in einem Kessel vermischt und anschließend unter einen Stickstoffatmosphäre aus 240 °C erhitzt. Das frei werden Reaktionswasser wurde destillativ entfernt. Nachdem die Säurezahl des Reaktionsgemisches kleiner als 5 war, wurde der Druck auf 22 mbar reduziert. Danach ließ man das Gemisch auf 90 °C abkühlen. Dann wurden 1g (1 Gew.-%) Bleicherde (Tonsil^{®}) zugesetzt und das Gemisch anschließend noch ca. 0,5 h gerührt. Es wurden 1080g einer rotbraunen, klaren Flüssigkeit erhalten.

### Es wurden analog insgesamt 5 verschiedene Oligoglycerinester hergestellt:

| Additiv | Fettsäure | Molverhältnis |
|---|---|---|
| Nr. | | Fettsäure : Oligoglycerin |
| (1) | Ölsäure | 4 : 1 |
| (2) | Ölsäure | 3 : 1 |
| (3) | Ölsäure | 2 : 1 |
| (4) | Ölsäure | 1,5 : 1 |
| (5) | Tallölfettsäure | 4 : 1 |

### Anwendungstechnische Prüfungen

Es wurde drei Basisspülungen ( I, II und III) aus den folgenden Inhaltsstoffen hergestellt:

### Spülung I

**(Spülungsgewicht 14 lb/gal, Öl-Wasser-Verhältnis 80 : 20 vv):**

| | |
|---|---|
| 262,5 ml | Paraffinöl |
| 4,2 g | Emulgator |
| 2,0 g | Ca(OH)₂ |
| 87,5ml | CaCl₂ -Lsg. (25 Gew.-% in Wasser) |
| 3,5 g | Fluid-loss-Additiv |
| 3,5 g | Strukturbildner |
| 280 g | Bariumsulfat |

### Spülung II

**(Spülungsgewicht 14 lb/gal, Öl-Wasser-Verhältnis 70 : 30 vv):**

| | |
|---|---|
| 174 ml | Paraffin |
| 78 ml | Wasser |
| 1 g | Strukturbildner |
| 6 g | Emulgator |
| 1,5 g | Ca(OH)₂₋ |
| 5 g | Fluid loss Additive |
| 27 g | CaCl₂ |
| 314 g | Bariumsulfat |

### Spülung III

**(Spülungsgewicht 12 lb/gal, Öl-Wasser-Verhältnis 70 : 30 vv):**

| | |
|---|---|
| 182 ml | Paraffin |
| 47 ml | Wasser |
| 10 g | Emulgator |
| 5 g | Ca(OH)₂ |
| 45 ml | CaCl₂ Lsg. (23%) |
| 8 g | Strukturbildner |
| 221 g | Bariumsulfat |

Als Additiv wurden zusätzlich jeweils 17,5 g eines Oligoglycerinesters (1) zugesetzt. Zum Vergleich wurde eine nicht-additivierte Spülung gemessen. Die Spülungen wurden mit dem Almen-Wieland-Test auf deren Schmierwirkung geprüft. Es gelten die folgenden Umrechnungsfaktoren in das SI-System: 1 lbf = 4,448 m kg s; 1 lb = 0,454 kg; 1 gal = 3,791.

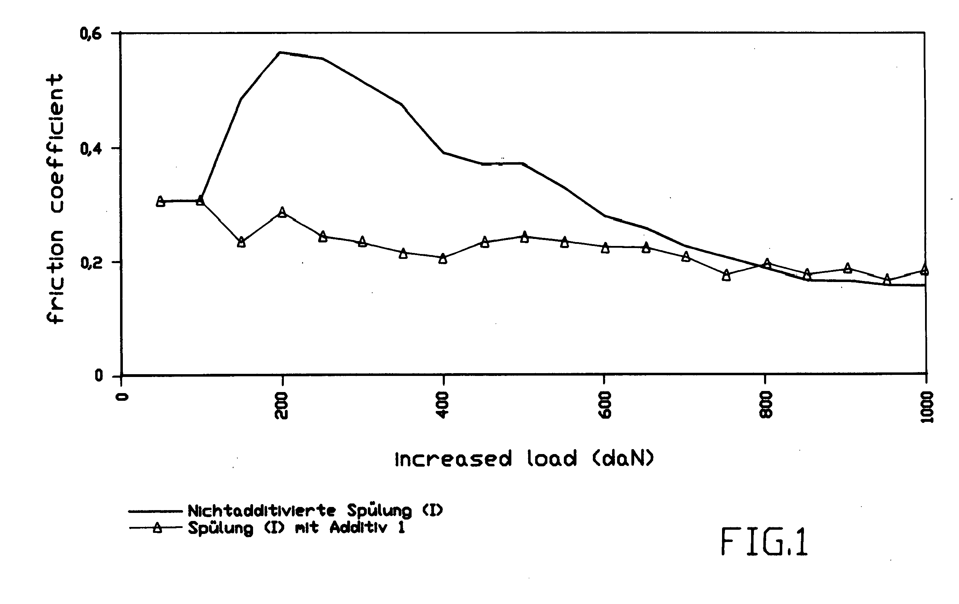

In der Abbildung 1 sieht man den Graph der Messung der Spülung (I), einmal additiviert mit dem Additiv (1), einmal ohne Additiv. Man erkannt, dass die additivierte Spülung ein niedrigeren Reibwert bei gleicher Belastung aufweist als dir nicht-additiverte Spülung.

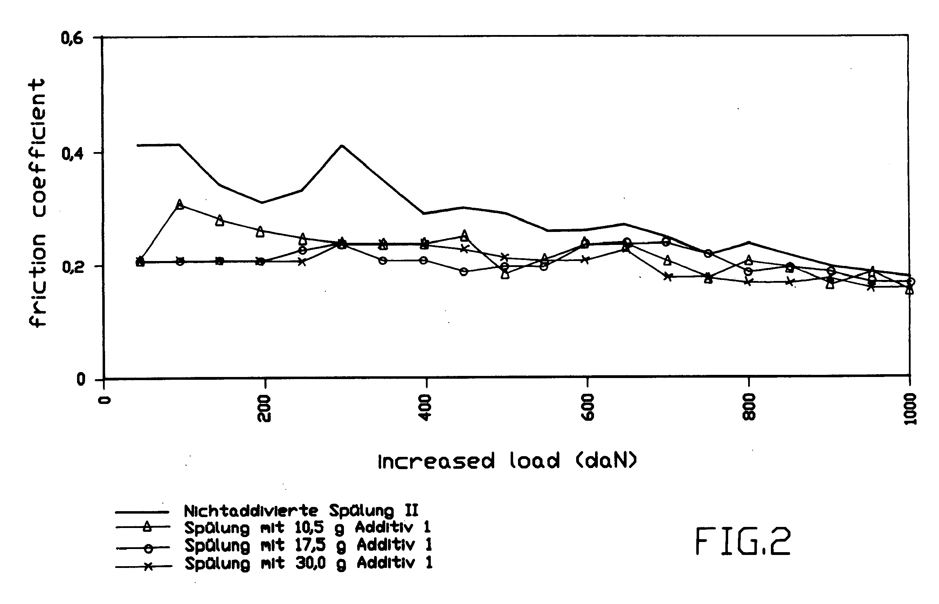

Abbildung 2 betrifft die Spülung (II), wobei das Additiv (1) aber in Mengen von 10,5 g, 17,5g und 30,0 g zugesetzt worden ist, verglichen mit einer nicht-additivierten Spülung. Auch hier erkennt man den die Schmierung der Spülung verbessernden Einfluss der erfindungsgemäßen Oligoglyceride.

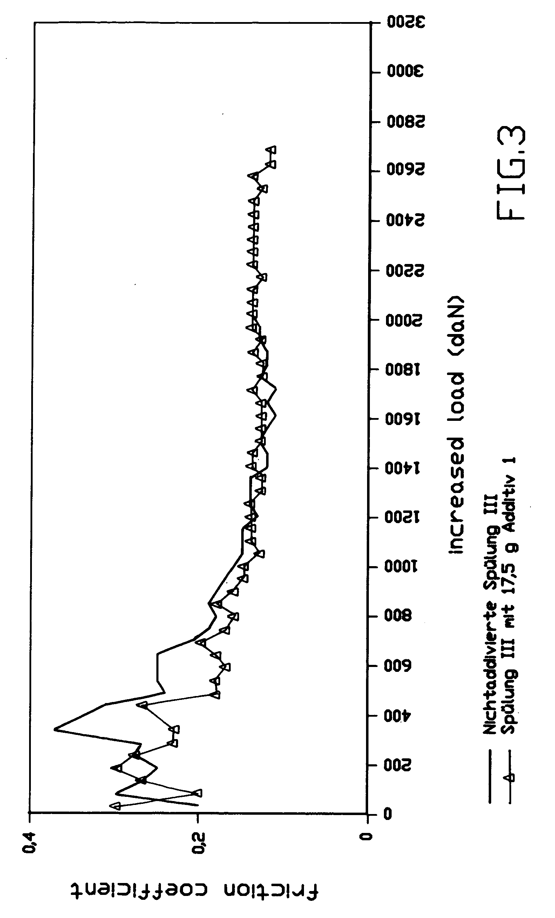

Abbildung 3 betrifft die Spülung III, die wiederum mit dem Additiv (1) und ohne ein Additiv 1 gemessen worden ist. Man sieht, dass das System mit dem Oligoglycerinester (1) viel mehr Druck aushält als die unadditivierte Spülung.

## Patentansprüche

1. Verwendung von Oligoglycerinfettsäureester, hergestellt aus
(a) einer Säurekomponente, ausgewählt aus
(a1) Fettsäuren der allgemeinen Formel (I)
R-COOH (I)
in der R für einen gesättigten oder ungesättigten, verzweigten oder linearen Alkyl- oder Alkenylrest mit 7 bis 21 C-Atomen steht, und/oder
(a2) Dicarbonsäuren und/oder
(a3) Dimerfettsäuren und/oder
(a4) Oligomerfettsäuren und/oder
(a5) Hydroxyfettsäuren
(b) einer Polyolkomponente, die ausgewählt ist aus Oligoglycerinen oder Alkoxylate von Oligoglycerinen,
als Schmiermitteladditiv in ölbasierten Bohrspülmitteln.

2. Verwendung nach Anspruch 1, **dadurch gekennzeichnet, dass** die Fettsäuren der Formel (I) ausgewählt sind aus ungesättigten, linearen Fettsäuren.

3. Verwendung nach mindestens einem der Ansprüche 1 bis 2, **dadurch gekennzeichnet, dass** Oligoglycerinfettsäuren ausgewählt sind, die durch Umsetzung von Oligoglycerinen der Formel (II) 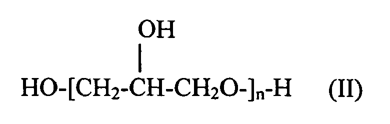 in der n eine Zahl zwischen 2 und 10 bedeutet, mit Fettsäuremischungen, vorzugsweise Mischungen aus gesättigten und ungesättigten Fettsäuren und/oder Dicarbonsäure und/oder Dimeren- und/oder oligomeren Fettsäuren hergestellt worden sind.

4. Verwendung nach mindestens einem der Ansprüche 1 bis 3, **dadurch gekennzeichnet, dass** Tri-, Tetra- und/oder Pentaester der Oligoglycerine verwendet werden.

5. Verwendung nach mindestens einem der Ansprüche 1 bis 4, **dadurch gekennzeichnet, dass** als Fettsäure für die Veresterung die Ölsäure oder die Tallölfettsäuren oder Mischungen davon ausgewählt sind.

6. Verwendung nach mindestens einem der Ansprüche 1 bis 5, **dadurch gekennzeichnet, dass** bei der Veresterung das molare Verhältnis von Fettsäuren: Oligoglycerin im Bereich von 5 : 1 bis 1 : 1, vorzugsweise 4 : 1 bis 1 : 1 und insbesondere im Bereich von 4 : 1 bis 1,5 : 1 liegt.

7. Verwendung nach mindestens einem der Ansprüche 1 bis 6, **dadurch gekennzeichnet, dass** bei der Veresterung das molare Verhältnis von Dimerfettsäuren oder oligomeren Fettsäuren zum Oligoglycerin im Bereich von 1 : 1 bis 1 : 2 liegt.

8. Verwendung nach mindestens einem der Ansprüche 1 bis 7, **dadurch gekennzeichnet, dass** man die Oligoglycerinester als Additiv in Abmischung mit Tensiden, Kohlenwasserstoffen, Fettalkoholen, Fettsäurestern und/oder Fettsäuren oder Glycerin, Triglycerid oder Glykolen einsetzt.

9. Verfahren zur Verbesserung der Schmierwirkung von ölbasischen Bohrspülungen, vorzugsweise von Invert-Bohrspülungen ein, wobei den Spülungen Oligoglyceride gemäß der Beschreibung in Anspruch 1 in Mengen von 0,1 bis 10 Gew.-% zugesetzt werden.
